# EUROPÄISCHE PATENTSCHRIFT

(11) **EP 0 852 836 B1**
(45) Veröffentlichungstag und Bekanntmachung des Hinweises auf die Patenterteilung: **05.01.2000**
(21) Anmeldenummer: 96929966.8
(22) Anmeldetag: 23.09.1996
(51) Int. Cl.: H02B 1/32

(54) **VERBINDUNGSELEMENT ZUM BEFESTIGEN VON TRAGELEMENTEN**
CONNECTOR FOR SECURING SUPPORTS
ELEMENT DE LIAISON POUR LA FIXATION D'ELEMENTS PORTEURS

(30) Priorität: 25.09.1995 AT 51295 U
(43) Veröffentlichungstag der Anmeldung: 15.07.1998
(73) Patentinhaber: FELTEN & GUILLEAUME AUSTRIA AG, 3943 Schrems-Eugenia 1 (AT)
(72) Erfinder: GEGENBAUER, Bernhard, A-3830 Waidhofen/Thaya (AT)
(74) Vertreter: Gibler, Ferdinand, Dipl.Ing. Dr. techn.
(86) Internationale Anmeldenummer: AT9600170
(87) Internationale Veröffentlichungsnummer: WO9712431

(56) Entgegenhaltungen:
- DE-A- 3 047 089
- DE-U- 9 404 899
- FR-A- 2 436 545
- GB-A- 909 037

## Beschreibung

Die Erfindung betrifft ein Verbindungselement zum Befestigen von Tragelementen, wie Montageseitenwänden od. dgl., in Verteilerkästen, mit einem Grundkörper, der einerseits am Tragelement und anderseits im Verteilerkasten an einem Befestigungselement befestigbar ist, wobei der Grundkörper eine Anlagefläche und einen dieser im wesentlichen gegenüberliegenden Rastvorsprung aufweist, der etwa parallel zur Anlagefläche federnd verschiebbar ist.

In Verteilerkästen sind oft Tragelemente, wie Montageseitenwände od.dgl., zu befestigen, an denen in weiterer Folge Tragschienen für elektrische Geräte, Schalter u.dgl. befestigt werden. Diese Montageseitenwände sollen auf möglichst einfache Weise in den Verteilerkästen zu befestigen sein. Das Problem einer möglichst einfachen Befestigung der Seitenwände in Verteilerkästen tritt insbesondere dann auf, wenn die elektrischen Geräte schon außerhalb des Verteilerkastens an den Tragschienen befestigt wurden und diese wiederum außerhalb des Verteilerkastens mit den Montageseitenwänden verbunden wurden. In diesem Fall muß die ganze Baugruppe bestehend aus elektrischen Geräten, Verteilerschienen und Montageseitenwänden in den Verteilerkasten eingesetzt und anschließend in diesem befestigt werden.

Die DE-A-30 47 089 zeigt ein Verbindungselement zum Befestigen von Tragelementen (Frontplatte) in Verteilerkästen mit einem Grundkörper, der einerseits am Tragelement und anderseits im Verteilerkasten an einem Befestigungselement (Querschiene) befestigt werden kann, wobei der Grundkörper eine Anlagefläche und einen dieser im wesentlichen gegenüberliegenden Rastvorsprung aufweist, der etwa parallel zur Anlagefläche federnd verschiebbar ist. Bei der DE-A-30 47 089 liegt das Tragelement an der Anlagefläche an, da der Grundkörper keine Seitenflächen aufweist. Das Befestigungselement liegt zwischen der Tragplatte und dem Rastvorsprung.

Aufgabe der vorliegenden Erfindung ist es, ein Verbindungselement zur Verfügung zu stellen, mit welchem Tragelemente, wie Montageseitenwände od.dgl., besonders einfach in Verteilerkästen befestigt werden können.

Erfindungsgemäß wird diese Aufgabe bei einem gattungsgemäßen Verbindungselement dadurch gelöst, daß an der Anlagefläche das Befestigungselement befestigbar ist und daß der Grundkörper wenigstens eine Seitenfläche aufweist, an der das Tragelement befestigbar ist.

Mit Hilfe des erfindungsgemäßen Verbindungselementes ist das Befestigen von Tragelementen, wie Montageseitenwänden od.dgl. in Verteilerkästen dadurch besonders einfach durchführbar, daß die Tragelemente entweder alleine oder als bereits vorinstallierte Baugruppe mit Tragschienen usw. vorzugsweise an ihrer Unterkante im Verteilerkasten, vorzugsweise an einer besonders dafür vorgesehenen Halterung, aufgesetzt werden, wobei sie oben schräg nach außen geneigt sind und anschließend mit ihrem oberen Ende nach innen geschwenkt werden, bis das erfindungsgemäße Verbindungselement mit einer Anlagefläche am Befestigungselement anliegt und das Befestigungselement gleichzeitig am Rastvorsprung einrastet.

Das Tragelement ist anschließend bereits fest im Verteilerkasten verankert. Um es gegen unbeabsichtigtes Lösen zu sichern, kann gemäß einer Weiterbildung der Erfindung vorgesehen sein, daß im Grundkörper eine in der Anlagefläche mündende Bohrung angeordnet ist, die zur Aufnahme eines Verbindungselementes, z.B. einer Schraube, für das Befestigungselement dient. Mittels einer Schraube kann das Verbindungselement und somit auch das Tragelement problemlos am Befestigungselement des Verteilerkastens angeschraubt werden, ohne daß es dazu besonderer Anstrengungen erfordert, da das Tragelement ja bereits in seiner gewünschten Lage gut festgelegt ist.

Weitere Merkmale und Vorteile ergeben sich aus der nachfolgenden Beschreibung eines Ausführungsbeispieles der Erfindung.

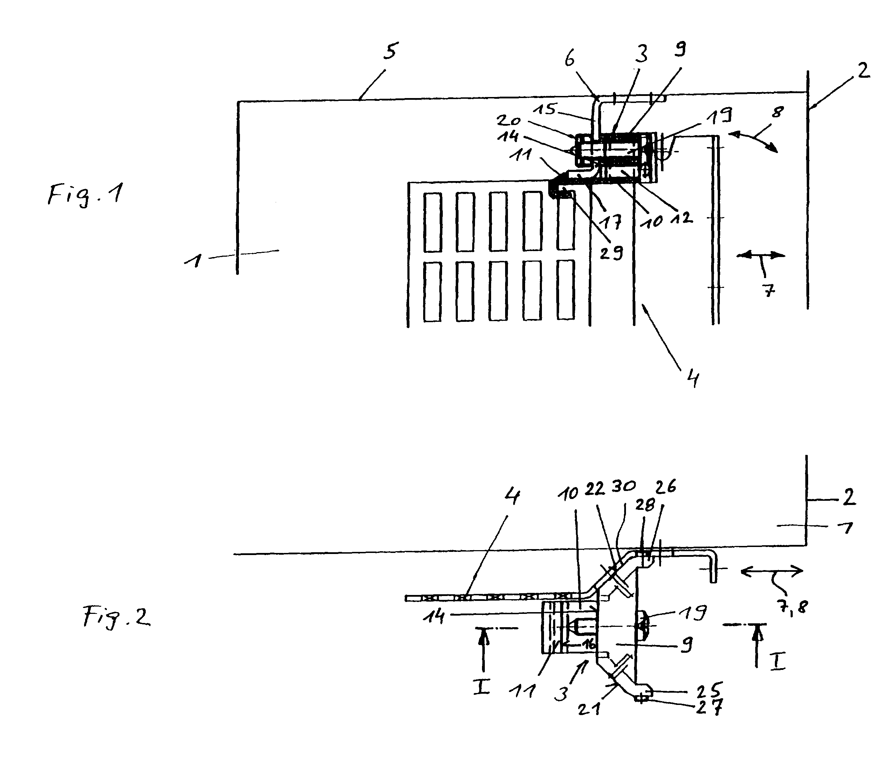

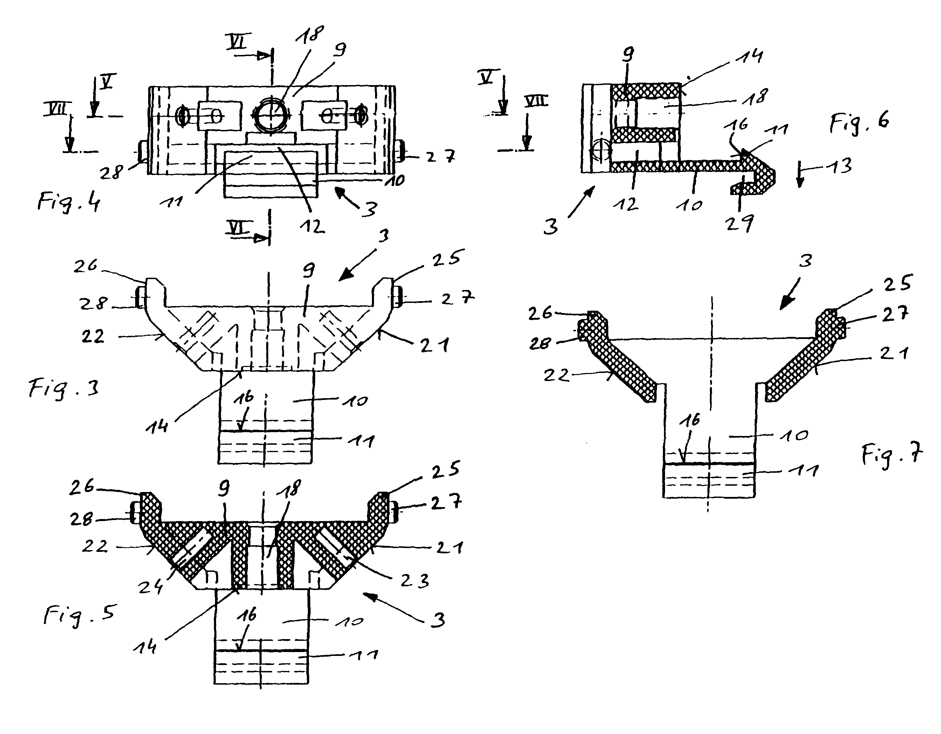

Es zeigt Fig. 1 einen Ausschnitt aus einem Verteilerkasten mit einer darin über das erfindungsgemäße Verbindungselement befestigten Seitenwand, wobei das Verbindungselement im Schnitt gemäß der Linie I-I in Fig. 2 dargestellt ist, Fig. 2 eine Draufsicht auf die Anordnung von Fig. 1 in vergrößertem Maßstab mit abgenommenem Befestigungselement, Fig. 3 eine Draufsicht auf das Verbindungselement entsprechend Fig. 2, Fig. 4 eine Ansicht auf das Verbindungselement in Fig. 3 von unten, Fig. 5 einen Schnitt durch das Verbindungselement entlang der Linie V-V in Fig. 4, Fig. 6 einen Schnitt durch das Verbindungselement von Fig. 4 entlang der Linie VI-VI in Fig. 4 und Fig. 7 einen Schnitt durch das Verbindungselement von Fig. 4 entlang der Linie VII-VII.

In Fig. 1 ist ein Ausschnitt aus einem Verteilerkasten dargestellt, wobei mit 1 eine Seitenwand des Verteilerkastens bezeichnet ist. An der in Fig. 1 mit 2 bezeichneten Seite kann eine Türe des Verteilerkastens angeordnet sein. Im Bereich der Seitenwand 1 des Verteilerkastens ist mit Hilfe des erfindungsgemäßen Verbindungselementes 3 ein Tragelement 4, das im gezeigten Ausführungsbeispiel eine Montageseitenwand ist, befestigt, wie in Fig. 2 zu sehen ist. Zu diesem Zweck ist an der Decke 5 des Verteilerkastens ein Befestigungselement 6 in Form eines Rastwinkels angeordnet z.B. angeschraubt oder angenietet. Das Verbindungselement 3 stellt damit die Verbindung zwischen dem Befestigungselement 6 (Rastwinkel) und dem Tragelement 4 (Montageseitenwand) dar.

An ihrem unteren in Fig. 1 nicht dargestellten Ende steht die Montageseitenwand im Bereich des Bodens des Verteilerkastens auf, wobei üblicherweise gesonderte Halterungen dafür vorgesehen sind. Die Art der Auflage der Montageseitenwand 4 im Bereich des Bodens des Verteilerkastens ist für die vorliegende Erfindung nicht von besonderer Bedeutung und kann beliebig ausgebildet sein. Voraussetzung ist lediglich, daß die Montageseitenwand entweder in Richtung des Doppelpfeiles 7 im Verteilerkasten verschiebbar oder vorzugsweise in Richtung des Doppelpfeiles 8 verschwenkbar ist.

Wie in den Fig. 3 bis 7 genauer erkennbar ist, besteht das erfindungsgemäße Verbindungselement 3 aus einem Grundkörper 9, an dem über eine federnde Zunge 10 ein Rastvorsprung 11 angeordnet ist. Zwischen dem Grundkörper 9 und der Zunge 10 ist eine Ausnehmung oder Nut 12 vorgesehen, um die Zunge 10 länger auszubilden und das Zurückfedern der Zunge 10 entlang des Pfeiles 13 (Fig. 6) zu erleichtern.

Der Rastvorsprung 11 liegt einer Anlagefläche 14 am Grundkörper 9 etwa gegenüber, welche eine Anlagefläche für den Mittelteil 15 des Rastwinkels 6 bildet. Wie in Fig. 1 zu sehen ist, ist der Rastwinkel 6 einerseits zwischen der Anlagefläche 14 und anderseits zwischen einer Rastfläche 16 (Fig. 6) am Rastvorsprung 11 in Richtung der Doppelpfeile 7 bzw. 8 festgelegt. An der Rastfläche 16 liegt der Rastwinkel 6 mit seinem freien Ende des Schenkels 17 an.

Um zu verhindern, daß sich das Verbindungselement 3 unbeabsichtigt vom Rastwinkel 6 löst, ist im Grundkörper 9 eine Bohrung 18 angeordnet, die in der Anlagefläche 14 mündet und die zur Aufnahme einer Schraube 19 dient. Die Schraube 19 kann dabei, wie in Fig. 1 dargestellt, über eine Käfigmutter 20 das Verbindungselement 3 mit dem Rastwinkel 6 verbinden. In einer anderen Ausführungsform kann natürlich auch eine selbstschneidende Blechschraube od.dgl., die im Rastwinkel 6 eingreift, verwendet werden.

Zur Befestigung des Verbindungselementes 3 an einer Montageseitenwand 4 weist das Verbindungselement 3 zwei Seitenflächen 21, 22 auf, die bezüglich des Rastvorsprunges 11 bzw. der Zunge 10 symmetrisch angeordnet sind. Diese symmetrische Anordnung bietet den Vorteil, daß ein und dasselbe Verbindungselement 3 sowohl für eine rechte, als auch eine linke Montageseitenwand 4 verwendet werden kann.

Die Seitenflächen 21, 22 sind vom Rastvorsprung 11 weg etwa V-förmig auseinanderlaufend ausgebildet und weisen eine Neigung entsprechend dem abgeknickten Teil 30 der Montageseitenwand 4 auf (Fig. 2). Es versteht sich, daß bei entsprechender Ausbildung der Montageseitenwand 4 die Seitenflächen 21, 22 natürlich auch parallel zueinander oder sonstwie symmetrisch angeordnet sein können.

In den Seitenwänden 21, 22 münden Bohrungen 23, 24, in welche z.B. selbstschneidende Schrauben zur Verbindung der Montageseitenwand 4 mit dem Verbindungselement 3 eingedreht werden können. Die Seitenwände 21, 22 weisen weiters einen abgeknickten Fortsatz 25, 26 auf, an welchen Ansätze 27, 28 angeordnet sind, welche in entsprechende Bohrungen an der Montageseitenwand 4 eingreifen.

Durch die soeben beschriebene Anordnung ist es auf sehr einfache Weise möglich das Verbindungselement 3 an einer Montageseitenwand 4 zu befestigen, indem das Verbindungselement 3 zuerst mit einem Ansatz 27 oder 28 in eine entsprechende Bohrung in der Montageseitenwand 4 eingesetzt wird und anschließend eine Schraube durch eine Bohrung in der Montageseitenwand 4 in die entsprechende Bohrung 23 oder 24 in der Seitenwand 21 oder 22 eingedreht wird.

Nachdem das Verbindungselement 3 wie soeben beschrieben, an einer Montageseitenwand 4 befestigt wurde, kann diese alleine oder als Baugruppe, bestehend aus zwei Montageseitenwänden mit dazwischen angeordneten Tragschienen mit elektrischen Schaltgeräten, in den Verteilerkasten eingesetzt werden. Dies kann entweder so erfolgen, daß die Montageseitenwand 4 bzw. die Baugruppe in Richtung des Pfeiles 7 in Fig. 1 nach links in den Verteilerkasten eingeschoben wird, bis der Rastvorsprung 11 am Schenkel 17 des Rastwinkels 6, wie in Fig. 1 dargestellt, eingerastet ist. In einer anderen Ausführungsform kann die Montageseitenwand oder eine ganze Baugruppe in den Verteilerkasten eingesetzt werden, indem diese in Fig. 1 schräg nach rechts oben geneigt zuerst im Bereich des Bodens des Verteilerkastens eingesetzt wird und anschließend in Richtung des Pfeiles 8 nach links hineingeschwenkt wird, bis das Verbindungselement 3 mit dem Rastwinkel 6 verrastet.

Anschließend kann die Verbindung zwischen Verbindungselement 3 und Rastwinkel 6 mittels einer Schraube 19 mit einer Mutter 20 gesichert werden.

Um das Abnehmen des Verbindungselementes 3 vom Rastwinkel 6 zu erleichtern, ist auf der dem Rastwinkel 6 gegenüberliegenden Seite des Rastvorsprunges 11 eine Nut 29 vorgesehen, die parallel zur Zunge 10 ausgerichtet und zum Grundkörper 9 des Verbindungselementes 3 hin offen ist. In diese Nut 29 kann man auf einfache Weise ein Werkzeug, z.B. einen Schraubenzieher, einsetzen und somit die Zunge 10 mit dem Rastvorsprung 11 in Richtung des Pfeiles 13 (Fig. 6) wegbiegen, worauf die Montageseitenwand 4 mit dem Verbindungselement 3 auf einfache Weise aus dem Verteilerkasten herausgenommen werden kann.

## Patentansprüche

1. Verbindungselement zum Befestigen von Tragelementen (4), wie Montageseitenwänden od. dgl., in Verteilerkästen, mit einem Grundkörper (9), der einerseits am Tragelement (4) und anderseits im Verteilerkasten an einem Befestigungselement (6) befestigbar ist, wobei der Grundkörper (9) eine Anlagefläche (14) und einen dieser im wesentlichen gegenüberliegenden Rastvorsprung (11) aufweist, der etwa parallel zur Anlagefläche (14) federnd verschiebbar ist, dadurch gekennzeichnet, daß an der Anlagefläche (14) das Befestigungselement (6) befestigbar ist und daß der Grundkörper (9) wenigstens eine Seitenfläche (21, 22) aufweist, an der das Tragelement (4) befestigbar ist.

2. Verbindungselement nach Anspruch 1, dadurch gekennzeichnet, daß der Rastvorsprung (11) an einer federnden Zunge (10) angeordnet ist.

3. Verbindungselement nach Anspruch 1 oder 2, dadurch gekennzeichnet, daß im Grundkörper (9) eine in der Anlagefläche (14) mündende Bohrung (18) angeordnet ist, die zur Aufnahme eines Verbindungselementes (19), z.B. einer Schraube, für das Befestigungselement (6) dient.

4. Verbindungselement nach einem der Ansprüche 1 bis 3, dadurch gekennzeichnet, daß die Seitenfläche zur Anlagefläche (14) im Winkel angeordnet ist.

5. Verbindungselement nach Anspruch 1 bis 4, dadurch gekennzeichnet, daß der Grundkörper (9) zwei einander gegenüberliegende, bezüglich des Rastvorsprunges (11) symmetrisch angeordnete Seitenflächen (21, 22) aufweist.

6. Verbindungselement nach einem der Ansprüche 1 bis 5, dadurch gekennzeichnet, daß eine in der Seitenfläche (21, 22) mündende Bohrung (23, 24 ) vorgesehen ist, die zur Aufnahme eines Verbindungselementes, z.B. einer Schraube, für das Tragelement (4) dient.

7. Verbindungselement nach einem der Ansprüche 1 bis 6, dadurch gekennzeichnet, daß an der Seitenfläche (21, 22) ein Ansatz (27, 28) angeordnet ist, der in eine Ausnehmung im Tragelement (4) eingreift.

8. Verbindungselement nach einem der Ansprüche 5 bis 7, dadurch gekennzeichnet, daß die Seitenflächen (21, 22) vom Rastvorsprung (11) weg etwa V-förmig auseinanderlaufend ausgebildet sind.

9. Verbindungselement nach einem der Ansprüche 1 bis 8, dadurch gekennzeichnet, daß auf der dem Befestigungselement (6) des Verteilerkastens gegenüberliegenden Seite des Rastvorsprunges (11) eine Nut (29) für den Eingriff eines Werkzeuges angeordnet ist.

10. Verbindungselement nach Anspruch 2 und 9, dadurch gekennzeichnet, daß die Nut (29) parallel zur federnden Zunge (10) ausgerichtet ist.

11. Verbindungselement nach Anspruch 9 oder 10, dadurch gekennzeichnet, daß die Nut (29) in Richtung zum Grundkörper (9) hin offen ist.

## Claims

1. Connecting element for fastening supporting elements (4), such as side mounting walls or the like, in distributor boxes, having a basic body (9) which can be fastened, on the one hand, on the supporting element (4) and, on the other hand, in the distributor box on a fastening element (6), the basic body (9) having an abutment surface (14) and a latching protrusion (11) which is essentially located opposite said abutment surface and can be displaced resiliently approximately parallel to the abutment surface (14), characterized in that the fastening element (6) can be fastened on the abutment surface (14), and in that the basic body (9) has at least one side surface (21, 22) on which the supporting element (4) can be fastened.

2. Connecting element according to Claim 1, characterized in that the latching protrusion (11) is arranged on a resilient tongue (10).

3. Connecting element according to Claim 1 or 2, characterized in that arranged in the basic body (9) is a bore (18) which opens out in the abutment surface (14) and serves for receiving a connecting element (19), e.g. a screw, for the fastening element (6).

4. Connecting element according to one of Claims 1 to 3, characterized in that the side surface is arranged at an angle to the abutment surface (14).

5. Connecting element according to Claims 1 to 4, characterized in that the basic body (9) has two mutually opposite side surfaces (21, 22) which are arranged symmetrically in relation to the latching protrusion (11).

6. Connecting element according to one of Claims 1 to 5, characterized in that there is provided a bore (23, 24) which opens out in the side surface (21, 22) and serves for receiving a connecting element, e.g. a screw, for the supporting element (4).

7. Connecting element according to one of Claims 1 to 6, characterized in that arranged on the side surface (21, 22) is an extension (27, 28) which engages in a recess in the supporting element (4).

8. Connecting element according to one of Claims 5 to 7, characterized in that the side surfaces (21, 22) are designed such that they diverge in an approximately V-shaped manner away from the latching protrusion (11).

9. Connecting element according to one of Claims 1 to 8, characterized in that a groove (29) for the engagement of a tool is arranged on that side of the latching protrusion (11) which is located opposite the fastening element (6) of the distributor box.

10. Connecting element according to Claims 2 and 9, characterized in that the groove (29) is aligned parallel to the resilient tongue (10).

11. Connecting element according to Claim 9 or 10, characterized in that the groove (29) is open in the direction of the basic body (9).

## Revendications

1. Elément de liaison pour la fixation d'éléments supports (4), tels que des cloisons de montage ou similaires dans des coffrets de répartition, comprenant un corps de base (9) qui peut être fixé d'une part à l'élément support (4) et d'autre part à un éléments de fixation (6) dans le coffret de répartition, le corps de base (9) comportant une surface d'appui (14) et une saillie d'encliquetage (11) disposée essentiellement à l'opposé de celle-ci, qui peut se déplacer élastiquement sensiblement parallèlement à la surface d'appui (14), caractérisé par le fait que l'élément de fixation (6) peut être fixé à la surface d'appui (14) et que le corps de base (9) présente au moins une surface latérale (21, 22) à laquelle l'élément support (4) peut être fixé.

2. Elément de liaison selon la revendication 1, caractérisé par le fait que la saillie d'encliquetage (11) est disposée sur une languette (10) élastique.

3. Elément de liaison selon la revendication 1 ou 2, caractérisé par le fait qu'un trou (18) qui débouche dans la surface d'appui (14) est aménagé dans le corps de base (9), lequel trou sert à recevoir un élément d'assemblage (19), par exemple une vis, pour l'élément de fixation (6).

4. Elément de liaison selon une des revendications 1 à 3, caractérisé par le fait que la surface latérale forme un angle avec la surface d'appui (14).

5. Elément de liaison selon une des revendications 1 à 4, caractérisé par le fait que le corps de base (9) présente deux surfaces latérales (21, 22) mutuellement en vis-à-vis, qui sont disposées symétriquement par rapport à la saillie d'encliquetage (11).

6. Elément de liaison selon une des revendications 1 à 5, caractérisé par le fait qu'il est prévu un trou (23, 24) qui débouche dans la surface latérale (21, 22) et sert à recevoir un élément d'assemblage, par exemple une vis pour l'élément support (4).

7. Elément de liaison selon une des revendications 1 à 6, caractérisé par le fait qu'un téton (27, 28) est disposé sur la surface latérale (21, 22), lequel têton pénètre pénètre dans un évidement dans l'élément support (4).

8. Elément de liaison selon une des revendications 5 à 7, caractérisé par le fait que les surfaces latérales (21, 22) s'écarte sensiblement en V par rapport à la saillie d'encliquetage (11).

9. Elément de liaison selon une des revendications 1 à 8, caractérisé par le fait qu'une rainure (29) pour l'insertion d'un outil est aménagée sur le côté de la saillie d'encliquetage (11) tourné vers l'élément de fixation (6) du coffret de répartition.

10. Elément de liaison selon les revendications 2 et 9, caractérisé par le fait que la rainure (29) est orientée parallèlement à la languette élastique (10).

11. Elément de liaison selon la revendication 9 ou 10, caractérisé par le fait que la rainure (29) est ouverte en direction du corps de base (9).
